# EUROPÄISCHE PATENTANMELDUNG

(11) **EP 1 087 128 A2**
(43) Veröffentlichungstag der Anmeldung: **28.03.2001**
(21) Anmeldenummer: 00120434.6
(22) Anmeldetag: 19.09.2000
(51) Int. Cl.: F02M 37/22

(54) **Betriebsstoffilter, Filterelement und Fahrzeug**

(30) Priorität: 24.09.1999 DE 19945772
(71) Anmelder: DEERE & COMPANY, Moline, Illinois 61265-8098 (US)
(72) Erfinder: Paty, Max, 45170 Neuville aux Bois (FR)
(74) Vertreter: Magin, Ludwig Bernhard

(57) **Zusammenfassung**

Betriebsstoffilter für Öle und insbesondere für Kraftstoffe für Dieselmotoren weisen oftmals eine Heizeinrichtung zur Erwärmung des Betriebsstoffes auf, da insbesondere Dieselkraftstoffe Bestandteile beispielsweise in Form von Paraffinen enthalten können, die sich bei geringen Temperaturen, wie sie beispielsweise im Winter auftreten können, verfestigen bzw. ausflocken und zu einem Verstopfen eines in einem Filtergehäuse des Betriebsstoffilters angeordneten Filterelements führen können. Ein Verstopfen kann vor allem bei einem Kaltstart also nach einem längeren Abstellen des Motors beispielsweise über Nacht auftreten, wodurch ein Starten des Motors aufgrund mangelnder Kraftstoffzufuhr unmöglich oder zumindest erschwert wird.

Es wird ein Betriebsstoffilter (10) mit einer in ein Filterelement (16) integrierten Heizeinrichtung (44), ein solches Filterelement (16) und ein Fahrzeug mit einem Betriebsstoffilter vorgeschlagen.

Betriebsstoffilter, Filterelemente und Fahrzeuge mit Betriebsstoffiltern werden in der Industrie, im Transportwesen und in der Landwirtschaft eingesetzt.

## Beschreibung

Die Erfindung betrifft einen Betriebsstoffilter mit einem Filtergehäuse, einem Filterelement und einer Heizeinrichtung, wobei das Filterelement sowie die Heizeinrichtung derart im Inneren des Filtergehäuses angeordnet sind, daß sie mit dem Betriebsstoff in Kontakt treten können, ein Filterelement und ein Fahrzeug.

Betriebsstoffilter für Öle und insbesondere für Kraftstoffe für Dieselmotoren weisen oftmals eine Heizeinrichtung zur Erwärmung des Betriebsstoffes auf, da insbesondere Dieselkraftstoffe Bestandteile, beispielsweise in Form von Paraffinen, enthalten können, die sich bei geringen Temperaturen, wie sie beispielsweise im Winter auftreten können, verfestigen bzw. ausflocken und zu einem Verstopfen eines in einem Gehäuse des Betriebsstoffilters angeordneten Filterelements führen können. Ein Verstopfen kann vor allem bei einem Kaltstart, also nach einem längeren Abstellen des Motors, beispielsweise über Nacht, auftreten, wodurch ein Starten des Motors aufgrund mangelnder Kraftstoffzufuhr unmöglich oder zumindest erschwert wird. Die US-A-4 944 343 zeigt einen Kraftstoffilter, dem eine Heizeinrichtung in Form eines Wärmetauschers vorgeschaltet ist, der eine zu dem Kraftstoffilter führende Kraftstoffleitung erwärmt. Die US-A-4 675 503 zeigt ein Heizelement, das als elektrisches Widerstandselement ausgeführt und an der Außenseite eines Filtergehäuses angeordnet ist.

Die EP-A2-0 356 667 offenbart einen Kraftstoffilter, insbesondere für Dieselmotoren, mit einer Heizeinrichtung bzw. einer Heizung, die im Inneren des Filterkopfes in dessen Eingangsbereich vorgesehen ist.

Das der Erfindung zugrunde liegende Problem wird in der ungleichmäßigen Erwärmung des Kraftstoffes durch bekannte Heizeinrichtungen in Betriebsstoffiltern, dem Verstopfen bekannter Filterelemente und der daraus resultierenden unzureichenden Funktion von mit solchen Betriebsstoffiltern ausgestatteten Fahrzeugen gesehen.

Dieses Problem wird erfindungsgemäß durch die Lehre der Patentansprüche 1, 6 bzw. 10 gelöst, wobei in den weiteren Patentansprüchen Merkmale aufgeführt sind, die die Lösung in vorteilhafter Weise weiterentwickeln.

Auf diese Weise wird der Betriebsstoff direkt an dem Filterelement erwärmt, wodurch ein gleichmäßiges Durchdringen des Betriebsstoffes durch das Filterelement ermöglicht wird. Darüber hinaus kann die Heizeinrichtung bei einem Auswechseln des Filterelements zusammen mit diesem ersetzt oder aber auch ein mit einer Heizeinrichtung ausgestattetes Filterelement in einem herkömmlichen Betriebsstoffilter nachgerüstet werden. Der Betriebsstoffilter kann zum Filtern verschiedener Betriebsstoffe beispielsweise von Ölen vorgesehen sein. Vorzugsweise handelt es sich aber um einen Kraftstoffilter, wie er üblicherweise in Verbindung mit Verbrennungsmotoren bzw. Dieselmotoren eingesetzt wird und der diesen bezogen auf die Kraftstoffzufuhr vorgeschaltet ist. Es ist denkbar, daß die Heizeinrichtung dauerhaft in Betrieb ist oder daß sie beispielsweise in Abhängigkeit von der Betriebsstoff- oder Kraftstofftemperatur manuell oder automatisch zu- bzw. abschaltbar ist. Es kann auch vorgesehen sein, daß die Heizeinrichtung deaktiviert wird, wenn beispielsweise ein Sensor ermittelt, daß in dem Betriebsstoffilter kein Betriebsstoff vorhanden ist, um beispielsweise einem Überhitzen der Heizeinrichtung bzw. des Betriebsstoffilters vorzubeugen. Erfindungsgemäße Betriebsstoffilter können an stationären Arbeitsmaschinen eingesetzt werden. Vorzugsweise werden sie aber an Fahrzeugen eingesetzt, da diese oftmals klimatischen Einflüssen ausgesetzt sind, und hierbei vorzugsweise an industriellen oder landwirtschaftlichen Arbeitsfahrzeugen, wie beispielsweise an Zugfahrzeugen, Baumaschinen und Ackerschleppern.

Ist das Filterelement zumindest bereichsweise flächig ausgebildet, so kann es in seinen flächigen Bereichen besonders gut von dem Betriebsstoff durchdrungen werden. Die Oberfläche des Filterelements kann aber auch uneben oder beliebig strukturiert ausgeführt werden. Die flächige Ausbildung weist allerdings Vorteile bezüglich der Anordnung der Heizeinrichtung auf, da diese auf diese Bereiche leicht aufgebracht oder zwischen diesen in einfacher Weise angeordnet werden kann, ohne daß die Heizeinrichtung aufwendige geometrische Formen annehmen muß.

Die Heizeinrichtung kann beispielsweise in der Art eines Wärmetauschers ausgebildet sein, dessen Wärmeübertragungsbereich(e) innerhalb des Filterelements angeordnet sind/ist. Vorzugsweise ist die Heizeinrichtung aber als ein elektrisches Widerstandselement ausgeführt. Dieses Widerstandselement weist zumindest einen Anschluß auf, über den es mit einer Spannungsquelle, beispielsweise einer Fahrzeugbatterie, verbunden werden kann. Ein solches elektrisches Widerstandselement erwärmt sich infolge des durch es hindurchfließenden Stromes und gibt infolgedessen Wärme an den es umgebenden Betriebsstoff ab. Es kann vorgesehen sein, daß in dem die Spannungsquelle und das Widerstandselement umfassenden Stromkreis zumindest ein Schalter vorgesehen ist, durch den der Stromfluß unterbrochen werden kann, so daß es zu keiner Erwärmung des elektrischen Widerstandselements kommt. Eine Betätigung dieses Schalters kann manuell, beispielsweise wenn eine Betätigungsperson feststellt, daß aufgrund der Umgebungstemperatur eine Kristallisation bzw. Verfestigung von Bestandteilen des Betriebsstoffes zu erwarten ist, oder aber automatisch erfolgen, beispielsweise sobald die Umgebungstemperatur einen vorgegebenen Wert unterschreitet. In dem Stromkreis kann auch ein Schalter bzw. ein Sensor vorgesehen sein, der ermittelt, ob in dem Betriebsstoffilter Betriebsstoff vorhanden ist, und der den Stromfluß unterbricht, wenn das Filterelement nicht von Betriebsstoff umgeben wird, und damit einer Überhitzung des Widerstandselements vorbeugt. Das elektrische Widerstandselement kann beispielsweise über Leitungen, die an einer geeigneten Stelle, wie beispielsweise einer Verschlußkappe des Filtergehäuses, aus dem Filtergehäuse austreten können und mit der Stromquelle bzw. im Falle des Minuspols allgemein mit Masse bzw. einer geerdeten Stelle verbunden werden können. Es ist auch denkbar, an dem Filtergehäuse oder auch dem Filterelement Kontakte vorzusehen, die mit dem Widerstandselement elektrisch verbunden sind und die mit entsprechenden Kontakten in dem Filterkopf, die mit der Stromquelle verbindbar sind bzw. mit dieser in Verbindung stehen, zusammenwirken können, so daß auch das Widerstandselement an die Stromquelle und an Masse angeschlossen ist.

Das elektrische Widerstandselement kann als eine auf das Filterelement bzw. auf seine flächigen Bereiche aufgebrachte elektrisch leitende Beschichtung ausgebildet sein. Besonders vorteilhaft ist es allerdings, in das Filterelement bzw. in seine flächigen Bereiche einen elektrisch leitfähigen Draht einzubringen. Dieser Draht kann aber auch auf die Oberfläche des Filterelements aufgebracht werden. Vorzugsweise ist das Widerstandselement gewunden bzw. mäanderförmig angeordnet, so daß es sich in einer Art Schlangenlinien, zumindest annähernd gleichmäßig über große Bereiche der Oberfläche des Filterelements erstreckt.

Eine besonders große Filterelementoberfläche ergibt sich, wenn das Filterelement durch ein gefaltetetes Filtermedium gebildet wird. Je nach Größe, Form und Aufbau des Betriebsstoffilters kann es vorteilhaft sein, das Filtermedium ein- bzw. mehrfach gefaltet auszubilden. Die Falzkanten können sich hierbei horizontal, vertikal oder auch schräg erstrecken. Dies läßt sich beispielsweise durch ein Papierfilter realisieren. Es ist aber auch der Einsatz anderer Filtermedien beispielsweise von Textil- oder Fasermaterialien oder von Metallfiltern denkbar.

Wird ein Filterelement zur Verwendung in einem üblichen Betriebsstoffilter mit einem integrierten Heizelement versehen, so kann ein solches Filterelement in Betriebsstoffiltern nachgerüstet werden, die zuvor mit üblichen Filterelementen und eventuell vollständig ohne Heizeinrichtung betrieben wurden.

Besonders vorteilhaft ist es, ein Fahrzeug mit einem Verbrennungsmotor mit einem erfindungsgemäßen Betriebsstoffilter zu versehen. Der Verbrennungsmotor des Fahrzeugs dient vorzugsweise dessen Fahrantrieb. Es können aber auch noch weitere Funktionen oder Baugruppen des Fahrzeugs, wie beispielsweise eine Zapfwelle oder ähnliches, durch den Verbrennungsmotor betrieben werden. Fahrzeuge werden oftmals im Freien betrieben, so daß eine Verbesserung der Kaltstartmöglichkeiten bei geringen Umgebungstemperaturen besonders wünschenswert ist.

In der Zeichnung ist ein nachfolgend näher beschriebenes Ausführungsbeispiel der Erfindung dargestellt. Es zeigt:
- Fig. 1: einen schematischen Schnitt durch einen Betriebsstoffilter mit einem Filtergehäuse, einem Filterkopf sowie einem Filterelement mit einer Heizeinrichtung,
- Fig. 2: eine schematische Darstellung eines Filtermediums und
- Fig. 3: eine schematische Darstellung einer Schaltungsanordnung für die Heizeinrichtung.

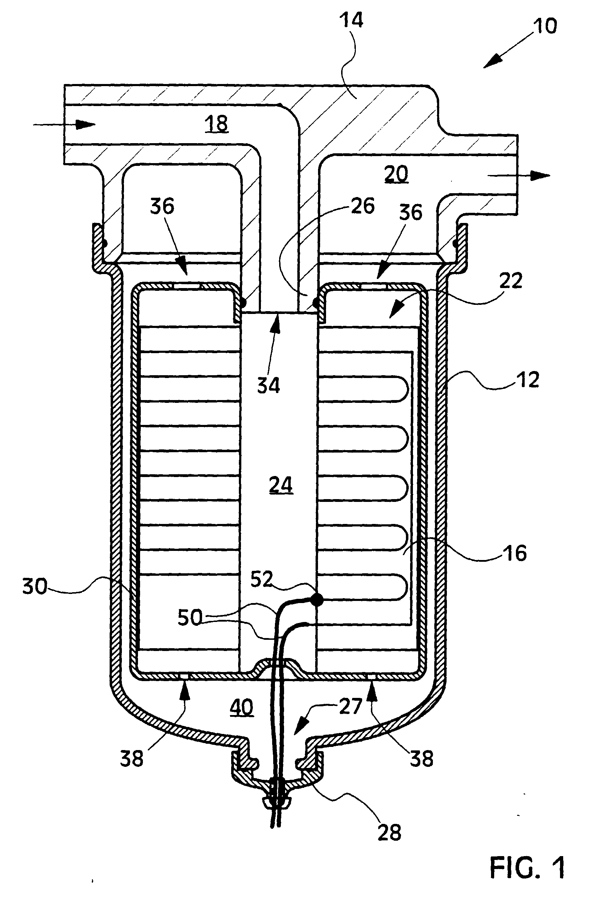

Ein Betriebsstoffilter 10 umfaßt, wie in Figur 1 dargestellt, ein Filtergehäuse 12, einen Filterkopf 14 und ein Filterelement 16. Der Betriebsstoffilter 10 ist von üblicher Bauart, wie sie beispielsweise in der bereits als Stand der Technik zitierten EP-A2-0356 667 beschrieben wird, und auf die im folgenden nur kurz eingegangen werden soll.

Der Filterkopf 14 weist einen Betriebsstoffzufluß 18 und einen Betriebsstoffabfluß 20 auf, wobei sowohl der Betriebsstoffzufluß 18 als auch der Betriebsstoffabfluß 20 in der Art eines in den Filterkopf 14 eingeformten bzw. eingebrachten Kanals ausgebildet ist, der jeweils einerseits in Richtung des Filtergehäuses 12 und andererseits zum Anschluß von nicht gezeigten Verbindungsleitungen zur Umgebung geöffnet ist. Der Betriebsstoffabfluß 20 mündet hierbei in montiertem Zustand in einen Randbereich 22 und der Betriebsstoffzufluß 18 in einen zentralen Bereich 24 des Filtergehäuses 12, wobei die Mündung 26 des Betriebsstoffzuflusses 18 in das Filtergehäuse 12 hineinragt.

Das Filtergehäuse 12 ist über eine nicht dargestellte Schraubverbindung oder Klemmverbindung mit dem Filterkopf 14 lösbar verbindbar. Im Inneren des Filtergehäuses 12 ist das Filterelement 16, dessen Aufbau noch genauer beschrieben wird, auf die Mündung 26 aufgesetzt. Unterhalb des Filterelements 16 weist das Filtergehäuse 12 eine Öffnung 27 auf, die im Betrieb durch eine auf das Filtergehäuse 12 aufschraubare Verschlußkappe 28 verschlossen wird.

Das Filterelement 16 besteht aus einem Mantelteil 30, der ein Filtermedium 32 umschließt. Der Mantelteil 30 weist eine Zuflußöffnung 34, Abflußöffnungen 36 und Sumpföffnungen 38 auf. Über die Zuflußöffnung 32 ist das Filterelement 16 mit der Mündung 26 des Betriebsstoffzuflusses 18 verbunden. Über die Abflußöffnungen 36 steht das Filterelement 16 mit dem Betriebsstoffabfluß 20 und über die Sumpföffnungen 38 mit einem Sumpfbereich 40 des Filtergehäuses 12 in Verbindung.

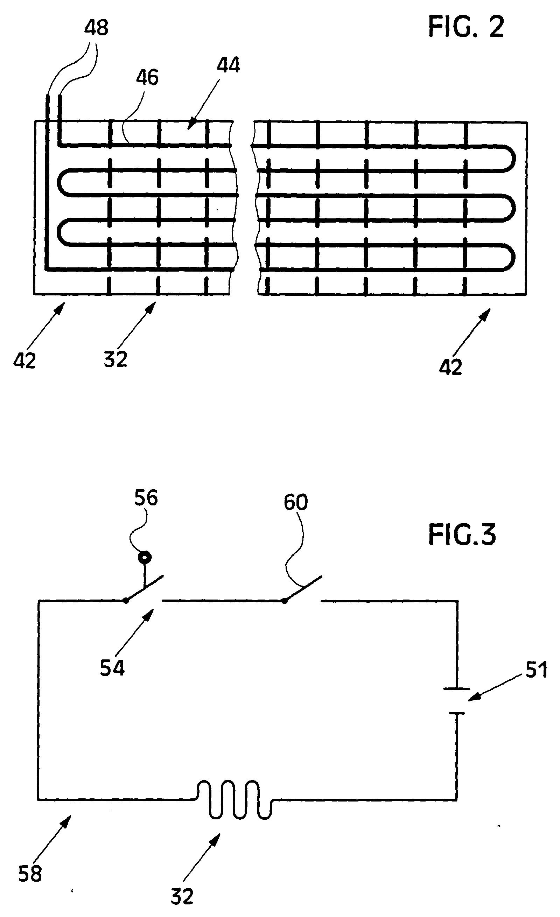

Das Filtermedium 32 wird durch ein streifenförmiges Filtermaterial gebildet, das derart mehrfach gefaltet ist, daß seine Außenkontur zylinderförmig ist, wobei die Endbereiche 42 (siehe Figur 2) des Filtermaterials beispielsweise, durch ein Verkleben miteinander verbunden sind.

Es wird nun auch auf Figur 2 Bezug genommen, in der das Filtermedium 32 zur Verdeutlichung in ungefaltetem Zustand dargestellt wird, wobei die Falzstellen durch unterbrochene Linien angedeutet sind. In das Filterelement 16 bzw. in das Filtermedium 32 ist eine Heizeinrichtung 44 integriert, die durch ein auf das Filtermedium 32 aufgebrachtes Widerstandselement 46 in der Art eines elektrisch leitfähigen Drahts ausgeführt ist. Dieses Widerstandselement 46 bildet gleichmäßig Schleifen bzw. ist auf dem Filtermedium 32 mäanderförmig angeordnet, so daß die gesamte Fläche des Filtermediums 32 möglichst gleichmäßig von dem Widerstandselement 46 überstrichen wird. Das Widerstandselement 46 weist Anschlüsse 48 auf, über die es über nur andeutungsweise gezeigte Leitungen 50, die das Filtergehäuse 12 beispielsweise über einen nicht näher dargestellten Dichtungsstopfen in der Verschlußkappe 28 verlassen können, mit einer Stromquelle 51 (siehe Figur 3) in Verbindung steht, die beispielsweise durch eine Fahrzeugbatterie gebildet werden kann. Einer der Anschlüsse 48 weist ein Sicherungselement 52 auf, das einen Schalter 54 zum Unterbrechen der Stromzufuhr und einen Sensor 56 umfaßt, der aufnimmt, ob in dem Betriebsstoffilter 10 Betriebsstoff vorhanden ist.

Eine schematische Darstellung einer Schaltungsanordnung 58 für eine solche Heizeinrichtung 44 wird in Figur 3 gezeigt. Die Schaltungsanordnung 58 wird in einfacher Weise durch eine Serienschaltung der Stromquelle 51, des durch den Sensor 56 betätigbaren Schalters 54, des Widerstandselements 46 und eines weiteren Schalters 60, durch den die Heizeinrichtung 44 manuell oder automatisch aktiviert werden kann, gebildet.

Im folgenden soll nun kurz auf die Funktionsweise des Betriebsstoffilters 10 und im besonderen auf die Funktionsweise der Heizeinrichtung 44 eingegangen werden.

Über den Betriebsstoffzufluß 18 gelangt Betriebsstoff über nicht gezeigte Leitungen von einer nicht gezeigten Betriebsstoffpumpe in den Betriebsstoffilter 10 und über die Mündung 26 in das Filterelement 16. Der Betriebsstoff durchdringt das Filtermedium 32, wobei Verunreinigungen beispielsweise bis zu einer Größe von 5 bis 10 Mikron von dem Filtermedium 32 zurückgehalten werden. Über die Abflußöffnungen 36 verläßt der Betriebsstoff im Anschluß das Filterelement 16 und gelangt über den Betriebsstoffabfluß 20 über nicht gezeigte Leitungen beispielsweise zu einem Fahrzeugantrieb. Über die Sumpföffnungen 38 und den Sumpfbereich 40 des Filtergehäuses 12 können abgeschiedene, unerwünschte Bestandteile des Betriebsstoffes durch ein Entfernen der Verschlußkappe 28 aus dem Betriebsstoffilter 10 abgelassen werden. Hierbei kann es sich beispielsweise um Schmutzpartikel oder auch um Wasser handeln, da deren Dichte größer ist als die Dichte des Betriebsstoffes und die sich daher in dem Sumpfbereich 40 des Filtergehäuses 12 absetzen.

Fällt die Umgebungstemperatur unter die Kristallisationstemperatur des Betriebsstoffes, so bilden sich in diesem Wachskristalle, deren Größe die Größe der durch den Betriebsstoffilter 10 abzuscheidenden Verschmutzungspartikel überschreitet. Um ein Verstopfen des Betriebsstoffilters 10 bzw. des Filtermediums 32 zu vermeiden, wird nun die Heizeinrichtung 44 manuell durch eine Bedienungsperson oder automatisch beispielsweise über einen Temperaturfühler zugeschaltet. Das Widerstandselement 32 wird von Strom durchflossen und erwärmt sich, wodurch der Betriebsstoff in unmittelbarer Umgebung des Filtermediums 32 erwärmt wird und die kristallinen Betriebsstoffbestandteile sich verflüssigen. Ist in dem Betriebsstoffilter 10 kein Betriebsstoff vorhanden, so kann dies durch den Sensor 56 erfaßt werden. Der Sensor 56 unterbricht dann über den Schalter 54 die Stromzufuhr, wodurch einer Überhitzung des Betriebsstoffilters 10 bzw. der Heizeinrichtung 44 vorgebeugt wird.

Vorstehend wurde ein einstufiger Betriebsstoffilter 10 beschrieben. Es ist aber auch ein zwei- oder mehrstufiger Betriebsstoffilter denkbar, bei dem sowohl nur eine Filterstufe oder aber auch zwei oder mehrere Filterstufen bzw. Filterelemente mit Heizeinrichtungen 44 versehen werden können.

## Patentansprüche

1. Betriebsstoffilter mit einem Filtergehäuse (12), einem Filterelement (16) und einer Heizeinrichtung (44), wobei das Filterelement (16) sowie die Heizeinrichtung (44) derart im Inneren des Filtergehäuses (12) angeordnet sind, daß sie mit dem Betriebsstoff in Kontakt treten können, dadurch gekennzeichnet, daß die Heizeinrichtung (44) in das Filterelement (16) integriert ist.

2. Betriebsstoffilter nach Anspruch 1, dadurch gekennzeichnet, daß das Filterelement (16) zumindest bereichsweise flächig ausgebildet ist und das die Heizeinrichtung (44) zwischen den flächigen Bereichen angeordnet ist, an diese angrenzt oder in diese eingeschlossen ist.

3. Betriebsstoffilter nach Anspruch 1 oder 2, dadurch gekennzeichnet, daß die Heizeinrichtung (44) als ein elektrisches Widerstandselement (46) ausgeführt ist, das über zumindest einen Anschluß (48) mit einer Stromquelle (51) verbindbar ist.

4. Betriebsstoffilter nach Anspruch 3, dadurch gekennzeichnet, daß das Widerstandselement (46) durch einen auf oder in das Filterelement (16) bzw. auf oder in die flächigen Bereiche auf- bzw. eingebrachten elektrisch leitenden Draht gebildet wird, der vorzugsweise mäanderförmig angeordnet ist.

5. Betriebsstoffilter nach einem oder mehreren der vorherigen Ansprüche, dadurch gekennzeichnet, daß das Filterelement (16) zumindest ein ein- oder mehrfach gefaltetes Filtermedium (32) enthält.

6. Filterelement ausgebildet zur Verwendung in einem Betriebsstoffilter (10) mit einem für einen Betriebsstoff in flüssigem Zustand durchlässigen Filtermedium (32), dadurch gekennzeichnet, daß in das Filtermedium (32) eine Heizeinrichtung (44) mit wenigstens einem Anschluß (48) integriert ist.

7. Filterelement nach Anspruch 6, dadurch gekennzeichnet, daß die Heizeinrichtung (44) als ein elektrisches Widerstandselement (46) ausgebildet ist, das über den Anschluß (48) mit einer Stromquelle (44) verbindbar ist.

8. Filterelement nach Anspruch 6 oder 7, dadurch gekennzeichnet, daß das Filtermedium (16) ein- oder mehrfach gefaltet und zumindest bereichsweise flächig ausgebildet ist.

9. Filterelement nach Anspruch 7, dadurch gekennzeichnet, daß das elektrische Widerstandselement (46) als ein elektrisch leitender Draht ausgebildet ist, der vorzugsweise mäanderartig auf oder in dem Filtermedium (32) angeordnet ist.

10. Fahrzeug, gekennzeichnet durch einen Betriebsstoffilter (10) nach einem oder mehreren der Ansprüche 1 bis 5.
